# EUROPÄISCHE PATENTSCHRIFT

(11) **EP 1 004 258 B1**
(45) Veröffentlichungstag und Bekanntmachung des Hinweises auf die Patenterteilung: **22.01.2003**
(21) Anmeldenummer: 99121829.8
(22) Anmeldetag: 04.11.1999
(51) Int. Cl.: A47B 57/56, F16B 12/32

(54) **Halbhohlprofil mit einem längs des Hohlprofils verschiebbaren Verbindungselement**
Half hollow extrusion with an attachment element slidable along the extrusion
Profilé à moitié creux avec un élément de fixation coulissant le long du profilé

(30) Priorität: 26.11.1998 DE 29821154 U
(43) Veröffentlichungstag der Anmeldung: 31.05.2000
(73) Patentinhaber: Erbslöh Aktiengesellschaft, 42553 Velbert (DE)
(72) Erfinder: Deiters, Christoph, 42113 Wuppertal (DE); Kanowski, Lothar, 42553 Velbert (DE); Schreiner, Karl-Heinz, 58332 Schwelm (DE)
(74) Vertreter: Ernicke, Hans-Dieter, Dipl.-Ing.

(56) Entgegenhaltungen:
- EP-A- 0 040 180
- US-A- 3 356 328
- US-A- 4 575 295

## Beschreibung

Die Erfindung bezieht sich auf ein Halbhohlprofil, insbesondere aus stranggepresstem oder gerolltem Leichtmetall, mit mindestens einem längs des Halbhohlprofils verschiebbaren Verbindungselement, wobei das Halbhohlprofil an mindestens einer Seite eine durchlaufende Wandaussparung besitzt, deren Begrenzungsränder als nach innen gerichtete Schenkel ausgebildet und stirnseitig mit einer zum Profil-Innenraum gerichteten Profilierung versehen sind.

Halbhohlprofile dieser Art sind in vielfältigen Ausführungsformen bekannt. Am häufigsten werden solche Profile mit mindestens einer, im Querschnitt hammerkopfartigen, durchlaufenden Nut versehen, um darin Verbindungselemente in Form von Hammerkopf-Schrauben oder dergleichen zu verschieben. Auf diese Weise werden an der gewünschten Stelle andere Profile klemmtechnisch befestigt.

Ein solches Hohlprofil ist durch die EP-A-0 040 180 bekannt geworden, die einen als Hängestiel ausgebildeten Ständer zeigt, an dem ein horizontaler Träger höhenverstellbar angeordnet ist. Die nach innen gerichteten Schenkel weisen ein Lagezahnprofil auf, in dessen Zahnlücken zwei am Kopf des Verbindungselementes befestigte Bolzen eingreifen. Über eine Verschraubung wird der Kopf gegen das Lagezahnprofil verspannt.

Damit ist aber nur eine stufenweise Verstellung des Verbindungselementes möglich.

Der Erfindung liegt die Aufgabe zugrunde, Verbindungselemente an wählbaren Stellen des Halbhohlprofils stufenlos zu verankern, ohne dass Verschraubungen verwendet werden.

Die erfindungsgemäße Lösung dieser Aufgabe besteht darin, dass die Profilierung die Form einer Rändelung aufweist, gegen welche der im Innenraum des Halbhohlprofils verschiebbar geführte Kopf des Verbindungselementes unter Zugbelastung mit hoher spezifischer Flächenpressung zwangsschlüssig andrückbar ist, wobei das Verbindungselement an dem aus dem Halbhohlprofil ragenden Teil eine Öse zur Aufnahme eines Zugorgans, insbesondere eines Spanngurtes, aufweist.

Es ist zwar durch die DE-A-196 33 032 und durch das DE-U-296 02 843 bekannt, die Innenseiten der Schenkel von U-Profilen mit einer Rändelung zu versehen, um daraus einen Rastkörper durch Spreizelemente festzuhalten. Davon unterscheidet sich die Erfindung durch die Lösung einer anderen Aufgabe sowie durch die Anordnung eines im Halbhohlprofil stufenlos verschiebbar geführten Kopfes eines Verbindungselementes, der federnd gegen die Rändelung angedrückt ist.

Die Erfindung geht vielmehr von dem Gedanken aus, die Fixierung des Verbindungselementes am Halbhohlprofil an gewünschter Stelle durch ein Anpressen des Kopfes des Verbindungselementes gegen die Rändelung herbeizuführen. Hierzu bedarf es einer Kraft, welche den Kopf des Verbindungselementes gegen die Rändelung andrückt. Zu diesem Zweck weist das Verbindungselement außenseitig eine Öse auf, um die Zugspannung z.B. durch einen die Öse durchgreifenden Spanngurt zu erzeugen.

Bei einem Ausführungsbeispiel der Erfindung ist im Innenraum des Halbhohlprofils mindestens eine den Kopf des Verbindungselementes gegen die Profilierung drückende Feder vorgesehen, die beispielsweise als eine durch den Hohlraum geführte, im Querschnitt konvex gewölbte Blattfeder ausgebildet sein kann.

Es ist alternativ die Möglichkeit gegeben, die Feder in Ein- oder Mehrzahl am Kopf, beispielsweise an der der Profilierung abgekehrten Seite des Kopfes des Verbindungselementes anzuordnen.

In diesen Fällen wird die spezifische Flächenpressung im Bereich der Spitzen bzw. Kanten der Profilierung ausgenutzt, um eine so große Reibkraft zu erzeugen, dass die Verschiebung des Verbindungselementes längs des Halbhohlprofils in der angepressten Stellung verhindert oder erschwert wird.

Eine weitere Variante besteht darin, dass das Material des Verbindungselementes weicher als das des Halbhohlprofiles ist. Auf diese Weise graben sich die Kanten oder Spitzen der Profilierung in die zugeordnete Oberfläche des Verbindungselementes ein und führen damit zu einem Zwangsschluss, solange eine Kraft wirkt, welche das Verbindungselement gegen die Profilierung anpresst.

Schließlich ist auch die Möglichkeit gegeben, den Kopf des Verbindungselementes an der der Profilierung zugekehrten Seite mit einer Gegenprofilierung zu versehen, wodurch beim Andrücken des Verbindungselementes gegen die Profilierung eine in Längsrichtung des Halbhohlprofils wirkende formschlüssige Verhakung entsteht, die jedoch keine stufenlose Verstellung des Verbindungselementes, sondern nur eine stufenweise Verstellung entsprechend der Teilung der Profilierung ermöglicht.

Die eingangs erwähnte Federkraft braucht im Rahmen eines weiteren Beispieles der Erfindung nur so groß dimensioniert zu werden, dass sie beim Verschieben des Verbindungselementes längs des Halbhohlprofils lediglich eine Fixierung im Sinne eines Reibschlusses an der gewünschten Stelle erzeugt. Die effektive zwangsschlüssige Verbindung zwischen dem Kopf des Verbindungselementes und der Profilierung erfolgt durch eine andere Kraft, beispielsweise eine Zugkraft, die an dem aus dem Halbhohlprofil ragenden Teil des Verbindungselementes angreift.

Diese und weitere Einzelheiten der Erfindung sind in der Zeichnung schematisch und beispielsweise dargestellt. Es zeigen:
- Figur 1:: einen Querschnitt durch ein Halbhohlprofil mit einem darin geführten Verbindungselement,
- Figur 2:: eine alternative Ausführung des Verbindungselementes,
- Figur 3:: Teillängsschnitt durch das Halbhohlprofil gemäß Figur 1 entlang der Linie III-III
- Figur 4:: einen Querschnitt durch ein Halbhohlprofil in einer Variante zu Figur 2.

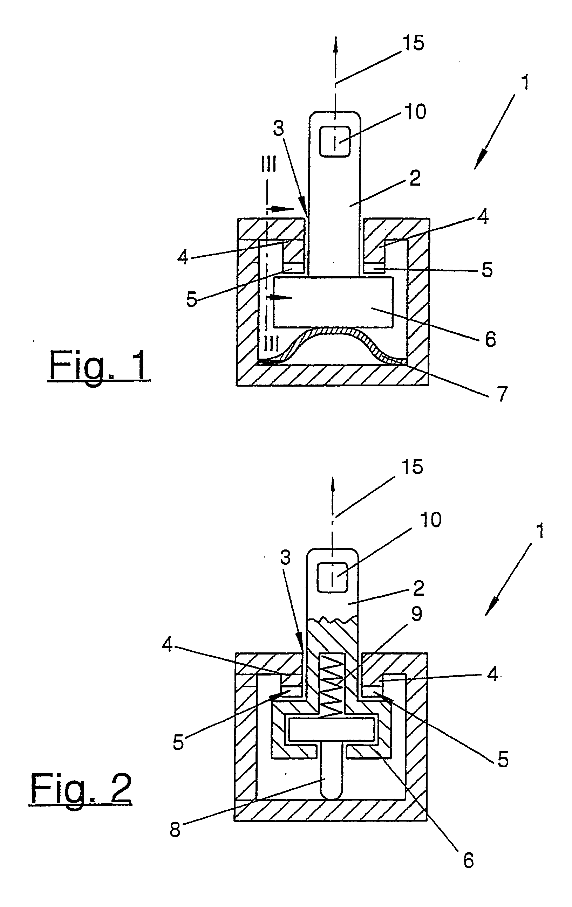

Beim Ausführungsbeispiel der Figur 1 ist ein Halbhohlprofil (1) im Querschnitt dargestellt, in dem ein Verbindungselement (2) längs des Innenraumes des Halbhohlprofiles (1) verschiebbar ist. Das Halbhohlprofil (1) weist an mindestens einer Wand eine durchlaufende Wandaussparung (3) auf, durch welche der Schaft des Verbindungselementes (2) nach außen geführt ist.

Der dargestellte Querschnitt des Halbhohlprofils (1) ist nur als Beispiel anstelle von vielen anderen möglichen Querschnittsformen zu verstehen.

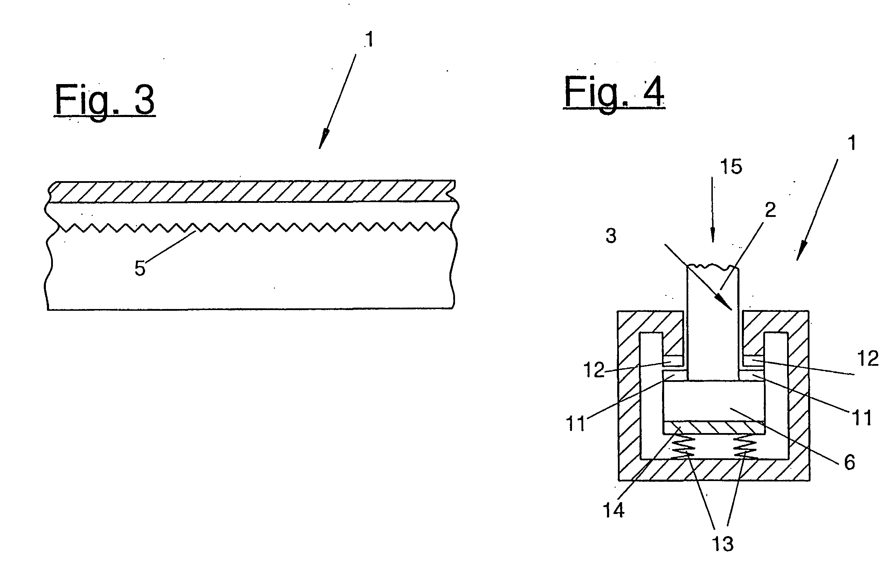

Beim gezeigten Beispiel wird die durchlaufende Wandaussparung (3) von zwei nach innen ragenden Schenkeln (4) begrenzt, die an ihren freien Enden längs durchlaufende Profilierungen (5) besitzen. Wie dies in Figur 3 gezeigt wird, ist die Profilierung (5) in Form einer Rändelung ausgebildet. Wesentlich ist, daß diese Profilierungen (5) während des Strangpressens des Halbhohlprofiles (1) durch ein im Anschluß an das Strangpreß-Werkzeug angeordnetes Aggregat gebildet werden.

Solche Aggregate sind in der Praxis für die Herstellung von Fensterrahmen oder dergleichen aus Strangpreß-Hohlprofilen bekannt, bei denen eine Profilierung in Form einer Wellenerzeugung eingebracht wird, um einen in den Hohlraum eingebrachten, wärmeisolierenden Kunststoffschaum gegen Verschiebung in Längsrichtung des Hohlprofiles zu verankern. Diese Maßnahmen dienen also einem anderen Zweck und wirken sich für den Gegenstand der Erfindung nicht naheliegend aus.

Wenn das Halbhohlprofil durch Rollformen hergestellt wird, wird das zu rollende Blech im Rollengang zuerst gerändelt und dann zum Profil gerollt.

Das Funktionsprinzip, das aus dem Beispiel der Figur 1 herleitbar ist, besteht nun darin, den Kopf (6) des Verbindungselementes (2) an beliebiger Stelle so gegenüber dem Halbhohlprofil zu verankern, daß eine weitere Längsverschiebung des Verbindungselementes verhindert oder mindestens erschwert wird. Zu diesem Zwecke wird im Beispiel der Figur 1 eine Blattfeder (7) verwendet, die im Innenraum des Halbhohlprofiles (1) angeordnet ist und den Kopf (6) des Verbindungselementes (2) gegen die Profilierungen (5) andrückt. Diese Federkraft soll ausreichen, um ein ungewolltes Verschieben des Verbindungselementes (2) längs des Halbhohlprofiles (1) zu verhindern.

Eine zwangsschlüssige Verankerung des Verbindungselementes (2) ergibt sich beim Ausführungsbeispiel durch eine Zugkraft, die symbolisch durch das strichpunktiert dargestellte Zugorgan (15) eingeleitet wird. Diese Zugkraft kann beispielsweise durch einen Spanngurt oder ein sonstiges Zugorgan erzeugt werden. Unter Wirkung dieser Zugkraft (15) wird der Kopf (6) des Verbindungselementes (2) fest gegen die Profilierung (5) gespannt, wobei die hohe spezifische Flächenpressung der vorragenden Kanten, Ecken oder Spitzen der Profilierung (5) für einen Reibschluß sorgen, der ein Verschieben des Verbindungselementes (2) verhindert.

Im Beispiel der Figur 2 ist eine Alternative zur Blattfeder (7) gemäß Figur 1 dargestellt. Hier weist das einzelne Verbindungselement (2) mindestens eine Druckfeder (9) auf, die einen im Verbindungselement (2) längs seiner Achse geführten Federbolzen (8) gegen den Boden des Halbhohlprofiles (1) drückt. Hierbei kann die Ausbildung des Federbolzens (8) ebenfalls eine Profilierung aufweisen. Im allgemeinen soll aber die Kraft der Druckfeder (9) ausreichen, um den Kopf (6) des Verbindungselementes (2) gegen die Profilierung (5) anzudrücken.

In beiden Fällen läßt sich das Verbindungselement (2) längs des Halbhohlprofiles (1) von Hand verschieben, indem man das Verbindungselement (2) leicht gegen die Feder (7) bzw. (9) andrückt und damit den Kopf (6) des Verbindungselementes (2) von der Profilierung (5) distanziert.

Das Ausführungsbeispiel der Figur 4 zeigt, daß man auch am Kopf (6) des Verbindungselementes (2) eine Gegenprofilierung (11) anbringen kann, die mit der Profilierung (12) korrespondiert. In diesem Falle ergibt sich beim Eingriff der Profilierungen (11,12) eine in Längsrichtung des Halbhohlprofiles (1) wirkende formschlüssige Verhakung.

Außerdem ist in Figur 4 gezeigt, daß man anstelle der in Figur 1 dargestellten Blattfeder (7) auch eine Druckschiene (14) verwenden kann, die gegenüber dem Boden des Halbhohlprofiles (1) durch Druckfedern (13) abgestützt ist und den Kopf (6) des Verbindungselementes (2) gegen die Profilierung (5) bzw. (12) drückt. Die Darstellung der Figur 5 zeigt das Einführen und Verschieben des Verbindungselementes, indem man in Richtung des Pfeiles eine manuelle Kraft des Verbindungselementes (2) gegen die Druckschiene (14) wirken läßt, wodurch die Verzahnungen (11,12) außer Eingriff gelangen und das Verbindungselement (2) längs des Halbhohlprofiles (1) verschiebbar ist.

Es versteht sich von selbst, daß die Querschnittsform des Halbhohlprofiles (1) in beliebiger Weise gestaltet werden kann. Die in der Zeichnung dargestellte Querschnittsform soll lediglich das. Funktionsprinzip vermitteln, ohne daß die Erfindung auf diese Form beschränkt ist.

Die Erfindung läßt sich überall dort anwenden, wo es darum geht, Gegenstände auf einer Grundfläche festzuhalten, beispielsweise, Kisten, Kartons, Stapel oder dergleichen auf einer Palette oder dergleichen zu verspannen. Die Grundfläche braucht dann lediglich mit den Halbhohlprofilen (1) ausgerüstet zu werden, um an beliebiger Stelle Befestigungsmittel anzuschließen. Daraus ergibt sich auch die Möglichkeit, mehr als ein Verbindungselement (2) am Halbhohlprofil (1) anzubringen und somit die Verspannung mit mehreren Verbindungselementen durchführen zu können.

Die Erfindung läßt sich auch bei vertikaler Anbindung der Halbhohlprofile (1) einsetzen, beispielsweise um Gegenstände an einer aufrechten Wandfläche festzuhalten.

### STÜCKLISTE

- 1: Halbhohlprofil
- 2: Verbindungselement
- 3: durchlaufende Wandaussparung
- 4: Schenkel
- 5: Profilierung
- 6: Kopf des Verbindungselementes
- 7: Blattfeder
- 8: Federbolzen
- 9: Druckfeder
- 10: Oese
- 11: Gegenprofilierung
- 12: Verzahnung
- 13: Druckfeder
- 14: Druckschiene
- 15: Zugorgan

## Patentansprüche

1. Halbhohlprofil, insbesondere aus stranggepreßtem oder gerolltem Leichtmetall, mit mindestens einem längs des Halbhohlprofils (1) verschiebbaren Verbindungselement (2), wobei das Hohlprofil (1) an mindestens einer Seite eine durchlaufende Wandaussparung (3) besitzt, deren Begrenzungsränder als nach innen gerichtete Schenkel (4) ausgebildet und stirnseitig mit einer zum Profil-Innenraum gerichteten Profilierung (5) versehen sind,
**dadurch gekennzeichnet, dass** die Profilierung (5) die Form einer Rändelung aufweist, gegen welche der im Innenraum des Halbhohlprofils (1) verschiebbar geführte Kopf (6) des Verbindungselementes (2) unter Zugbelastung mit hoher spezifischer Flächenpressung zwangsschlüssig andrückbar ist, wobei das Verbindungselement (2) an dem aus dem Halbhohlprofil (1) ragenden Teil eine Oese (10) zur Aufnahme eines Zugorgans (15), insbesondere eines Spanngurtes, aufweist.

2. Halbhohlprofil nach Anspruch 1, **dadurch gekennzeichnet, daß** im Innenraum des Halbhohlprofils (1) mindestens eine den Kopf (6) des Verbindungselementes (2) gegen die Profilierung (5) drückende Feder (7,9,13) vorgesehen ist.

3. Halbhohlprofil nach Anspruch 1 oder 2, **dadurch gekennzeichnet, daß** die Feder als eine durch den Hohlraum geführte, im Querschnitt konvex gewölbte Blattfeder (7) ausgebildet ist.

4. Halbhohlprofil nach einem der Ansprüche 2 oder 3, **dadurch gekennzeichnet, daß** die Feder (9) am Kopf (6), insbesondere an der der Profilierung abgekehrten Seite des Kopfes (6), des Verbindungselementes (2) angeordnet ist.

5. Halbhohlprofil nach einem der Ansprüche 1-4, **dadurch gekennzeichnet, daß** das Material des Verbindungselementes (2) weicher als das des Halbhohlprofiles (1) ist.

6. Halbhohlprofil nach einem der Ansprüche 1-5, **dadurch gekennzeichnet, daß** der Kopf (6) des Verbindungselementes (2) an der der Profilierung zugekehrten Seite eine Gegenprofilierung (11) aufweist.

## Claims

1. Semi-hollow section, in particular of extruded or rolled light metal, having at least one connecting element (2) displaceable along the semi-hollow section (1), the semi-hollow section (1), on at least one side, having a continuous wall aperture (3), the boundary margins of which are designed as inwardly directed legs (4) and are provided at the end face with a profiled portion (5) directed towards the section interior space, **characterized in that** the profiled portion (5) has the form of knurling, against which the head (6), displaceably guided in the interior space of the semi-hollow section (1), of the connecting element (2) can be pressed in a constrained manner under tensile loading with high specific surface pressure, the connecting element (2), at the part projecting from the semi-hollow section (1), having an eye (10) for accommodating a tension member (15), in particular a tightening strap.

2. Semi-hollow section according to Claim 1, **characterized in that** at least one spring (7, 9, 13) pressing the head (6) of the connecting element (2) against the profiled portion (5) is provided in the interior space of the semi-hollow section (1).

3. Semi-hollow section according to Claim 1 or 2, **characterized in that** the spring is designed as a leaf spring (7) directed through the cavity and convexly arched in cross section.

4. Semi-hollow section according to either of Claims 2 and 3, **characterized in that** the spring (9) is arranged on the head (6) of the connecting element (2), in particular on that side of the head (6) which faces away from the profiled portion.

5. Semi-hollow section according to one of Claims 1 to 4, **characterized in that** the material of the connecting element (2) is softer than that of the semi-hollow section (1).

6. Semi-hollow section according to one of Claims 1 to 5, **characterized in that** the head (6) of the connecting element (2) has a mating profiled portion (11) on the side facing the profiled portion.

## Revendications

1. Profilé à moitié creux, notamment en métal léger filé à la presse ou laminé, ayant au moins un élément (2) de liaison coulissant le long du profilé (1) à moitié creux, le profilé (1) creux ayant, au moins d'un côté, un renfoncement (3) continu de paroi, dont les bords de délimitation sont constitués en branches (4) dirigées vers l'intérieur et sont munis du côté frontal d'un profilage (5) dirigé vers l'intérieur du profilé,
**caractérisé en ce que** le profilage (5) a la forme d'un moletage contre lequel la tête (6), qui peut coulisser à l'intérieur du profilé (1) à moitié creux, de l'élément (2) de liaison peut être, sous une charge de traction, forcée de s'appliquer avec une grande pression superficielle spécifique, l'élément (2) de liaison ayant, sur la partie en saillie du profilé (1) à moitié creux, un oeillet (10) de réception d'un organe (15) de traction, notamment d'une sangle de blocage.

2. Profilé à moitié creux suivant la revendication 1, **caractérisé en ce qu'**il est prévu à l'intérieur du profilé (1) à moitié creux au moins un ressort (7, 9, 13) repoussant sur le profilage (5) la tête (6) de l'élément (2) de liaison.

3. Profilé à moitié creux suivant la revendication 1 ou 2 **caractérisé en ce que** le ressort est constitué sous la forme d'un ressort (7) à lame guidé dans la cavité et de section transversale courbée de façon convexe.

4. Profilé à moitié creux suivant l'une des revendications 2 ou 3 **caractérisé en ce que** le ressort (9) est disposé sur la tête (6) de l'élément (2) de liaison, notamment sur le côté de la tête (6) qui est éloigné du profilage.

5. Profilé à moitié creux suivant l'une des revendications 1 à 4 **caractérisé en ce que** la matière de l'élément (2) de liaison est plus tendre que celle du profilé (1) à moitié creux.

6. Profilé à moitié creux suivant l'une des revendications 1 à 5, **caractérisé en ce que** la tête (6) de l'élément (2) de liaison a un contreprofilage (11) du côté tourné vers le profilage.
